# EUROPEAN PATENT SPECIFICATION

(11) **EP 3 550 424 B1**
(45) Date of publication and mention of the grant of the patent: **31.07.2024**
(21) Application number: 19165401.1
(22) Date of filing: 27.03.2019
(51) Int. Cl.: G06F 3/16

(54) **METHOD FOR CONFIGURING WIRELESS SOUND BOX, WIRELESS SOUND BOX, AND TERMINAL DEVICE**
VERFAHREN ZUR KONFIGURATION EINER DRAHTLOSEN SOUNDBOX, DRAHTLOSE SOUNDBOX UND ENDGERÄTEVORRICHTUNG
PROCÉDÉ DE CONFIGURATION D'UN BOÎTIER ACOUSTIQUE SANS FIL, BOÎTIER ACOUSTIQUE SANS FIL ET DISPOSITIF DE TERMINAL

(30) Priority: 28.03.2018 CN 201810264884
(43) Date of publication of application: 09.10.2019
(73) Proprietor: Shenzhen Grandsun Electronic Co., Ltd., Shenzhen, Guangdong 518117 (CN)
(72) Inventor: CHI, Xin, Shenzhen, Guangdong 518117 (CN); WU, Haiquan, Shenzhen, Guangdong 518117 (CN); ZHANG, Enqin, Shenzhen, Guangdong 518117 (CN); CAO, Lei, Shenzhen, Guangdong 518117 (CN); SHI, Ruiwen, Shenzhen, Guangdong 518117 (CN)
(74) Representative: Lewis Silkin LLP

(56) References cited:
- US-A- 4 401 852
- US-A1- 2015 382 096
- US-A1- 2017 069 323
- US-B1- 9 749 741

## Description

### TECHNICAL FIELD

The present application relates to the technical field of smart devices, and more particularly to a method for configuring a wireless sound box, a wireless sound box, a terminal device, and a computer readable storage medium.

### TECHNICAL FIELD

With the gradual wide application of speech technology, a smart sound box with speech interaction function, such as an smart sound box based on wireless connection (referred to as wireless sound box), has been widely popularized, and in addition to realizing speech interaction, the improvement in the sound quality of speech play is also an important direction to be developed. However, the inventors found in their study that while improving the sound quality of the wireless sound box, the speech recognition accuracy of the wireless sound box is often adversely affected, for example, at the same time of improving the sound quality of the wireless sound box and enhancing the low frequency band, the nonlinear output of the audio may be increased, the vibration of the body of the sound box would be easily caused, and the generated harmonics would affect the speech frequency band, resulting in a low accuracy of speech recognition. An image display apparatus enabling voice recognition is described in US2017/0069323A1, and a portable headphone that provide for a user adjustment of an audio equalizer setting directly at the headphone for a desired audio data frequency/amplitude profile is described in US2015/0382096A1. A method and a device for reducing intermodulation distortion is described in US9749741B1.

### SUMMARY

In view of the above, embodiments of the present application provides a method for configuring a wireless sound box, a wireless sound box, a terminal device, and a computer readable storage medium, in order to solve the problem that the existing wireless sound box has relatively low accuracy of speech recognition after improvement of the sound quality thereof.

A first aspect of embodiments of the present application provides a method for configuring a wireless sound box, which comprises:
acquiring information of a wakeup mode of a wireless sound box, where the wakeup mode comprises:
   a speech wakeup mode, in which, a speech signal is collected and it is determined whether the speech signal contains a speech wakeup information, if the speech wakeup information is contained, the wireless sound box is waken up; and
   a non-speech wakeup mode, which comprises: a mode where wakeup is triggered by a button, and a mode where a wakeup function is turned off; wherein the mode where wakeup is triggered by the button comprises collecting a button signal and detecting whether the button signal contains a preset button wakeup information, if the button signal contains the preset button wakeup information, the wireless sound box is waken up; and
configuring an equalizer parameter of the wireless sound box according to the information of the wakeup mode. Said configuring an equalizer parameter of the wireless sound box according to the information of the wakeup mode comprises:
   configuring, under the speech wakeup mode, the equalizer parameter to be a first mode parameter for regulating a nonlinear distortion, comprising: regulating a gain of a first preset frequency to a first predetermined value under the speech wakeup mode, wherein the first preset frequency comprises at least one frequency band and/or at least one frequency, and the first predetermined value comprises a set of predetermined gain multiples corresponding to various frequency bands and/or various frequencies, respectively, and
   configuring, under the non-speech wakeup mode, the equalizer parameter into a second mode parameter for regulating an output sound effect, comprising: regulating gains of various frequency signals to predetermined standard values under the non-speech wakeup mode.

A second aspect of embodiments of the present application provides a wireless sound box, which comprises:
an acquisition module, configured for acquiring information of a wakeup mode of a wireless sound box, where the wakeup mode comprises:
   a speech wakeup mode, in which, a speech signal is collected and it is determined whether the speech signal contains a speech wakeup information, if the speech wakeup information is contained, the wireless sound box is waken up; and
   a non-speech wakeup mode, which comprises: a mode where wakeup is triggered by a button, and a mode where a wakeup function is turned off; wherein the mode where wakeup is triggered by the button comprises collecting a button signal and detecting whether the button signal contains a preset button wakeup information, if the button signal contains the preset button wakeup information, the wireless sound box is waken up;
a configuration module, configured for configuring an equalizer parameter of the wireless sound box according to the information of the wakeup mode. Said configuring an equalizer parameter of the wireless sound box according to the information of the wakeup mode comprises:
   configuring, under the speech wakeup mode, the equalizer parameter to be a first mode parameter for regulating a nonlinear distortion, comprising: regulating a gain of a first preset frequency to a first predetermined value under the speech wakeup mode, wherein the first preset frequency comprises at least one frequency band and/or at least one frequency, and the first predetermined value comprises a set of predetermined gain multiples corresponding to various frequency bands and/or various frequencies, respectively, and
   configuring, under the non-speech wakeup mode, the equalizer parameter into a second mode parameter for regulating an output sound effect, comprising: regulating gains of various frequency signals to predetermined standard values under the non-speech wakeup mode.

A third aspect of embodiments of the present application provides a terminal device, which comprises: a processor, a memory, and a computer program stored in the memory and executable by the processor. The processor is configured to implement steps in the above method when executing the computer program.

A fourth aspect of embodiments of the present application provides a computer readable storage medium comprising instructions which, when executed by the terminal device, cause the terminal device to carry out the method for configuring a wireless sound box..

Embodiments of the present application, when compared with the prior art, has the following beneficial effects: in embodiments of the present application, the information of the wakeup mode of the wireless sound box is acquired, with the wakeup mode comprising the speech wakeup mode and the non-speech wakeup mode; and the equalizer parameter of the wireless sound box is configured according to the information of the wakeup mode, with said configuring an equalizer parameter of the wireless sound box according to the information of the wakeup mode comprising configuring, under the speech wakeup mode, the equalizer parameter to be the first mode parameter for regulating the nonlinear distortion, and configuring, under the non-speech wakeup mode, the equalizer parameter to be the second mode parameter for regulating the output sound effect. In embodiments of the present application, by configuring different equalizer parameters according to different wakeup modes of the wireless sound box, the accuracy of speech recognition can be improved while improving the sound quality of the wireless sound box, thereby being adapted to the needs of different application scenarios, and possessing relatively high practicality and usability.

### BRIEF DESCRIPTION OF THE DRAWINGS

For the purpose of describing the technical solutions in the embodiments of the present application more clearly, the accompanying drawings required for describing the embodiments or the prior techniques will be briefly introduced below. It is apparent that the accompanying drawings in the following description are merely some embodiments of the present application. Those skilled in the art may obtain other drawings according to the accompanying drawings without creative efforts.
FIG. 1 is a schematic flowchart of an implementation of a method for configuring a wireless sound box provided by a first embodiment of the present application;
FIG. 2 is a schematic flowchart of an implementation of a method for configuring a wireless sound box provided by a second embodiment of the present application;
FIG. 3 is a schematic diagram of a wireless sound box provided by a third embodiment of the present application; and
FIG. 4 is a schematic diagram of a terminal device provided by a fourth embodiment of the present application.

### DETAILED DESCRIPTION OF THE EMBODIMENTS

In the following description, for the purpose of explanation rather than limitation, specific details are set forth such as particular system architectures, techniques, etc. in order to provide a thorough understanding of the embodiments of the present application. However, it will be apparent to those skilled in the art that the present application may be implemented in other embodiments that are not particularly subject to these specific details. In other instances, detailed descriptions of well-known systems, devices, circuits, and methods are omitted so as not to obscure the description of the present application with unnecessary detail.

It will be understood that the term "comprising"/ "including", when used in this specification and the appended claims, represents the presence of stated features, integers, steps, operations, elements, and/or components, but does not preclude the presence or addition of one or more other features, integers, steps, operations, elements, components, and/or groups thereof.

It is also to be understood that the terminology used herein in the specification of the present application is for the purpose of merely describing particular embodiments and is not intended to limit the present application. As used in the specification of the present application and the appended claims, the singular forms such as "a", "an" and "the" are intended to include the plural forms unless the context clearly represents otherwise.

It is further to be understood that the term "and/or" as used in the specification of the present application and appended claims refers to any and all possible combinations of one or more of the associated listed items, and includes these combinations.

As used in this specification and the appended claims, the term "if" may be interpreted as "when" or "once" or "in response to determining" or "in response to detecting" from the context. Similarly, the phrase "if determining" or "if detecting [the described condition or event]" may be interpreted as meaning "once determining" or "in response to determining" or "once detecting [the described condition or event]" or "in response to detecting [the described condition or event]" from the context.

For the purpose of describing the technical solutions described in the present application, the description will refer to the specific embodiments below.

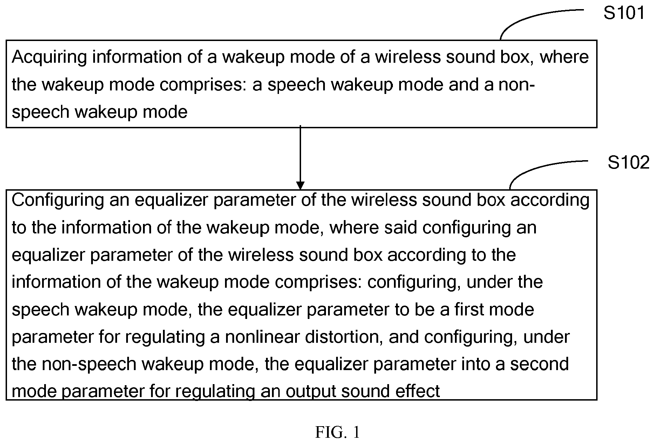

FIG. 1 is a schematic flowchart of an implementation of a method for configuring a wireless sound box provided by a first embodiment of the present application. The method illustrated in FIG. 1 may comprise the following steps:
Step S101, acquiring information of a wakeup mode of a wireless sound box, where the wakeup mode comprises: a speech wakeup mode and a non-speech wakeup mode;
In this embodiment, the wireless sound box may be a sound box adopting wireless connection to realize the signal transmission. The wireless sound box may comprise a Bluetooth wireless sound box, a Wi-Fi wireless sound box, an FM the wireless sound box, etc.

The speech wakeup mode of the first embodiment of the present application is collecting a speech signal and detecting whether the speech signal contains a speech wakeup information, if the speech wakeup information is contained, the wireless sound box is waken up.

The non-speech wakeup mode of the first embodiment of the present application comprises: a mode where wakeup is triggered by a button, and a mode where a wakeup function is turned off, of which, the mode where wakeup is triggered by the button may comprise collecting a button signal and detecting whether the button signal contains a preset button wakeup information, if the button signal contains the preset button wakeup information, the wireless sound box is waken up. Exemplarily, under the mode where the wakeup function is turned off, the wireless sound box may be used to display an audio, such as music.

Step S102, configuring an equalizer parameter of the wireless sound box according to the information of the wakeup mode, where said configuring an equalizer parameter of the wireless sound box according to the information of the wakeup mode comprises: configuring, under the speech wakeup mode, the equalizer parameter to be a first mode parameter for regulating a nonlinear distortion, and configuring, under the non-speech wakeup mode, the equalizer parameter into a second mode parameter for regulating an output sound effect.

In the first embodiment of the present application, the equalizer is a module configured for separately regulating an amplification of electrical signals of various frequency components in the wireless sound box, and compensating the defects of the speakers and the sound field and compensating and modifying various sound sources, etc. by regulating the electrical signals of different frequencies. In the first embodiment of the present application, the nonlinear distortion may be a nonlinear distortion produced by an output audio relative to an original audio. The nonlinear distortion may comprise a harmonic distortion, a clipping distortion, an intermodulation distortion, etc. When an original speech signal passes through an amplifier, in addition to an amplified input component, an output signal further includes a two-fold, three-fold, four-fold, or even much higher frequency components, which are called harmonic. While harmonic distortion refers to distortion caused by harmonic, which can be expressed by a ratio of the root mean square (rms) value of a target harmonic (second-order, third-order, etc.) to the rms value of an original frequency signal.

In the first embodiment of the present application, the operation of configuring, under the speech wakeup mode, the equalizer parameter to be the first mode parameter for regulating the nonlinear distortion comprises: regulating a gain of a first preset frequency to a first predetermined value and/or lowering a low frequency output power to a second predetermined value under the speech wakeup mode, where the first preset frequency comprises at least one frequency band and/or at least one frequency, and the first predetermined value comprises a set of predetermined gain multiples corresponding to various frequency bands and/or various frequencies, respectively.

Exemplarily, the first preset frequency may be a continuous frequency band, for example, it may be a frequency band other than a low frequency, such as a frequency band above 150 Hz, in such case, the first predetermined value is a predetermined value of a gain multiple corresponding to the continuous frequency band. The first preset frequency band may also be a plurality of segmented frequency bands and/or single frequencies or a set of the plurality of segmented frequency bands and the single frequencies, in such case, the first predetermined value may be a set of predetermined gain multiples corresponding to the plurality of segmented frequency bands and/or single frequencies, respectively. By setting the gain values corresponding to different frequencies or frequency bands respectively, it is possible to regulate the gain of the frequency and the frequency band which are prone to nonlinear distortion, thereby reducing the nonlinear distortion. In addition, exemplarily, for a sound box equipped with a passive basin or an active woofer, the nonlinear output of the sound box can be reduced by lowering the low frequency output power to the second predetermined value, thereby alleviating vibration of the body of the wireless sound box caused by the relatively high low-frequency component, thereby reducing the interference of the speech signal and improving the recognition rate of the speech.

In the first embodiment of the present application, the operation of configuring, under the non-speech wakeup mode, the equalizer parameter to be the second mode parameter for regulating the output sound effect comprises: regulating gains of various frequency signals to predetermined standard values and/or regulating output powers of the various frequency signals to rated output frequencies under the non-speech wakeup mode.

The standard values corresponding to the various frequency signals may be the same or different, the predetermined standard values may be a set of standard values corresponding to the various single frequency signals. By regulating the gains of the various frequency signals to the predetermined standard values and/or regulating the output powers of the various frequency signals to the rated output frequencies, the defects of the sound field of the speaker can be compensated by regulating the various different frequency signals, thereby realizing the enhancement and modification of various sound source and other particular purposes.

In the first embodiment of the present application, the information of the wakeup mode of the wireless sound box is acquired, with the wakeup mode comprising the speech wakeup mode and the non-speech wakeup mode; and the equalizer parameter of the wireless sound box is configured according to the information of the wakeup mode, with said configuring an equalizer parameter of the wireless sound box according to the information of the wakeup mode comprising configuring, under the speech wakeup mode, the equalizer parameter to be the first mode parameter for regulating the nonlinear distortion, and configuring, under the non-speech wakeup mode, the equalizer parameter to be the second mode parameter for regulating the output sound effect. In the first embodiment of the present application, by configuring different equalizer parameters according to different wakeup modes of the wireless sound box, the accuracy of speech recognition can be improved while improving the sound quality of the wireless sound box, thereby being adapted to the needs of different application scenarios, and possessing relatively high practicality and usability.

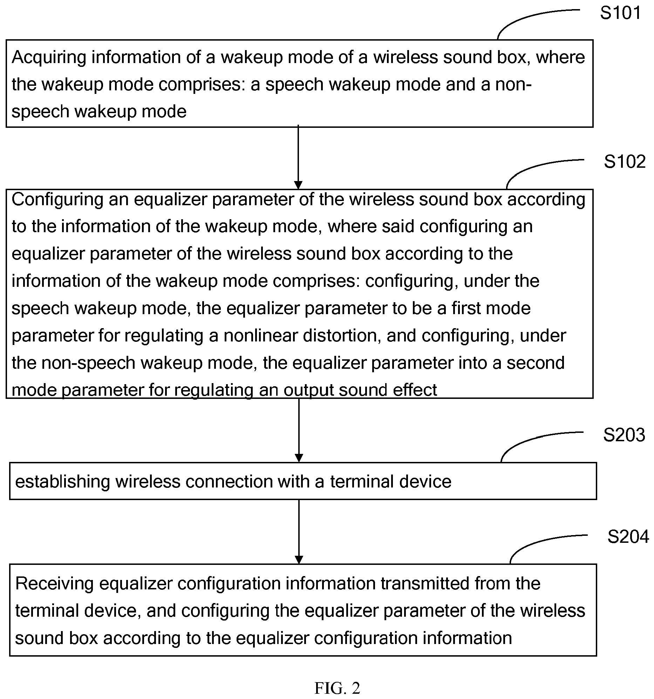

FIG. 2 is a schematic flowchart of an implementation of a method for configuring a wireless sound box provided by a second embodiment of the present application. The method illustrated in FIG. 2 may comprise the following steps:
Step S201, acquiring information of a wakeup mode of a wireless sound box, where the wakeup mode comprises: a speech wakeup mode and a non-speech wakeup mode;
Step S202, configuring an equalizer parameter of the wireless sound box according to the information of the wakeup mode, where said configuring an equalizer parameter of the wireless sound box according to the information of the wakeup mode comprises: configuring, under the speech wakeup mode, the equalizer parameter to be a first mode parameter for regulating a nonlinear distortion, and configuring, under the non-speech wakeup mode, the equalizer parameter into a second mode parameter for regulating an output sound effect.

The steps S201 and S202 in this embodiment are the same as steps S101 and S102. Descriptions of steps S101 and S102 can be referred for details, thus would not be described herein again

Step S203, establishing wireless connection with a terminal device.

In this embodiment of the present application, the wireless connection may be a Bluetooth connection, a Wi-Fi connection, etc.

Step S204, receiving equalizer configuration information transmitted from the terminal device, and configuring the equalizer parameter of the wireless sound box according to the equalizer configuration information.

Exemplarily, in the second embodiment of the present application, after the establishment of the wireless connection between the wireless sound box and the terminal device, the wireless sound box is remotely set by the terminal device via software like APP. Exemplarily, the equalizer configuration information may comprise information of specific parameter configuration of the equalizer, and the specific parameters of the equalizer of the wireless sound box may be remotely set by the terminal device. The equalizer configuration information may also comprise information of mode configuration of the equalizer, and the pre-configured mode can be selected by the terminal device, such that the equalizer parameters can be configured by the wireless sound box according to the specific configuration parameters of such mode.

Optionally, the equalizer configuration information transmitted from the terminal device may comprise: automatically configured mode information, equalizer information configured according to the first mode parameter, or equalizer information configured according to the second mode parameter. The first mode parameter and the second mode parameter may be pre-configured by the wireless sound box.

Exemplarily, the automatically configured mode information may be information configured according to the setting of the wireless sound box.

Implementation of the second embodiment are explained taken a specific implementation mode as an example.

Exemplarily, the wireless sound box is a Bluetooth sound box, the Bluetooth sound box establishes a serial port profile connection or a Bluetooth low energy connection with the terminal device. A use mode is selected by the control software in the terminal device via a button for mode selection and then displayed, and the use mode can be switched among three modes, which are as follows: automatic mode, where when the automatic mode is selected, the automatically configured mode information is transmitted from the terminal device to the Bluetooth sound box; a high wakeup rate mode, where when the high wakeup rate mode is selected, the equalizer information configured according to the first mode parameter pre-configured by the Bluetooth sound box is transmitted from the terminal device to the Bluetooth sound box; and a high quality mode, where when the high quality mode is selected, the equalizer information configured according to the second mode parameter pre-configured by the Bluetooth sound box is transmitted from the terminal device to the Bluetooth sound box.

In the second embodiment of the present application, the information of the wakeup mode of the wireless sound box is acquired, with the wakeup mode comprising the speech wakeup mode and the non-speech wakeup mode; the equalizer parameter of the wireless sound box is configured according to the information of the wakeup mode, with said configuring an equalizer parameter of the wireless sound box according to the information of the wakeup mode comprising configuring, under the speech wakeup mode, the equalizer parameter to be the first mode parameter for regulating the nonlinear distortion, and configuring, under the non-speech wakeup mode, the equalizer parameter to be the second mode parameter for regulating the output sound effect; the wireless connection is established between the terminal device and the wireless wound box; and the equalizer configuration information transmitted from the terminal device is received by the wireless wound box, the equalizer parameter of the wireless sound box is configured according to the equalizer configuration information. In the second embodiment of the present application, by configuring different equalizer parameters according to different wakeup modes of the wireless sound box, the accuracy of speech recognition can be improved while improving the sound quality of the wireless sound box, moreover, the equalizer parameters of the wireless sound box can be configured by the terminal device to achieve the remote control, thereby being adapted to the needs of different application scenarios, and possessing relatively high practicality and usability.

It should be understood the serial number of each step in the above embodiments does not mean the sequence of execution. The sequence of execution of each process should be determined by its function and inherent logic, and should not constitute any limitation on the implementation process of the embodiments of the present application.

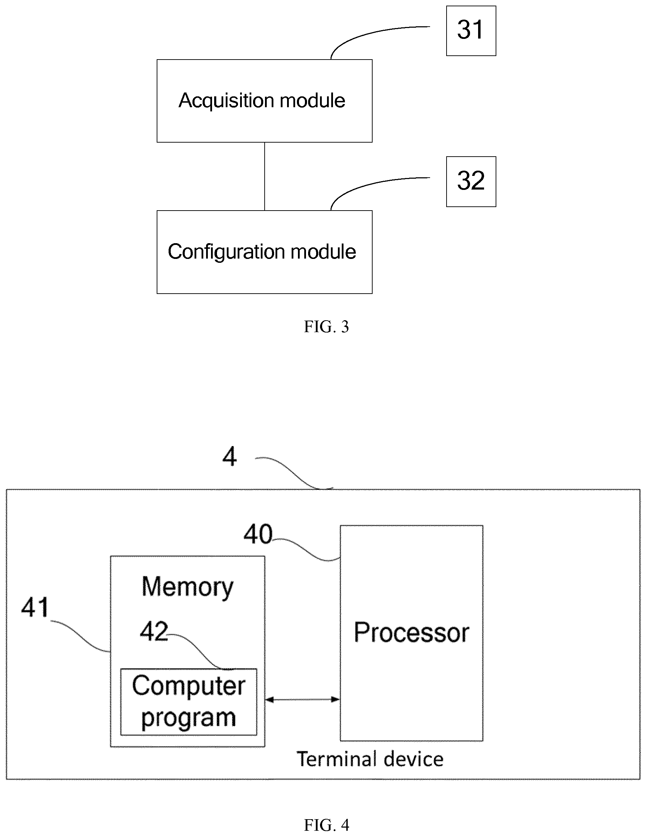

FIG. 3 is a schematic diagram of a wireless sound box provided by a third embodiment of the present application. For convenience of description, only parts related to the embodiments of the present application are shown.

The wireless sound box comprises:
an acquisition module 31, configured for acquiring information of a wakeup mode of a wireless sound box, where the wakeup mode comprises: a speech wakeup mode and a non-speech wakeup mode;
a configuration module 32, configured for configuring an equalizer parameter of the wireless sound box according to the information of the wakeup mode, where said configuring an equalizer parameter of the wireless sound box according to the information of the wakeup mode comprises: configuring, under the speech wakeup mode, the equalizer parameter to be a first mode parameter for regulating a nonlinear distortion, and configuring, under the non-speech wakeup mode, the equalizer parameter into a second mode parameter for regulating an output sound effect.

The configuration module 32 is specifically configured for regulating a gain of a first preset frequency to a first predetermined value and/or lowering a low frequency output power to a second predetermined value under the speech wakeup mode.

The configuration module 32 is specifically configured for regulating gains of various frequency signals to predetermined standard values and/or regulating output powers of the various frequency signals to rated output frequencies under the non-speech wakeup mode.

Optionally, the wireless sound box further comprise:
a wireless module, configured for establishing wireless connection with a terminal device.
a receiver module, configured for receiving equalizer configuration information transmitted from the terminal device, and configuring the equalizer parameter of the wireless sound box according to the equalizer configuration information.

FIG. 4 is a schematic diagram of a terminal device provided by a fourth embodiment of the present application. As shown in FIG. 4, the terminal device 4 of this embodiment includes a processor 40, a memory 41, and a computer program 42 stored in the memory 41 and executable by the processor 40. The processor 40, when executing the computer program 42, implements steps in the method embodiments as described above, such as steps S101 to S 102 shown in FIG. 1. Alternatively, the processor 40, when executing the computer program 42, implements the functions of each module/unit in the embodiments of the terminal device described above, such as the functions of the modules 31 to 32 shown in FIG. 3.

Exemplarily, the computer program 42 may be divided into one or more modules/units, which are stored in the memory 41 and executed by the processor 40 to complete the present application. The one or more modules/units may be a series of computer program instruction segments capable of completing a particular function, and the instruction segments are used to describe the executing process of the computer program 42 in the terminal device 4. For example, the computer program 42 may be divided into an acquisition module and a configuration module, and specific functions of these modules are as follows:
an acquisition module, configured for acquiring information of a wakeup mode of a wireless sound box, where the wakeup mode comprises: a speech wakeup mode and a non-speech wakeup mode;
a configuration module, configured for configuring an equalizer parameter of the wireless sound box according to the information of the wakeup mode, where said configuring an equalizer parameter of the wireless sound box according to the information of the wakeup mode comprises: configuring, under the speech wakeup mode, the equalizer parameter to be a first mode parameter for regulating a nonlinear distortion, and configuring, under the non-speech wakeup mode, the equalizer parameter into a second mode parameter for regulating an output sound effect.

The terminal device 4 may be a computing device such as a desktop computer, a notebook, a palmtop computer, and a cloud server. The terminal device may include, but is not limited to, a processor 40 and a memory 41. It will be understood by those skilled in the art that FIG. 4 is only an example of the terminal device 4 rather than limiting the terminal device 4, it may include more or less components than those illustrated, or combine some components, or different components. For example, the terminal device may further include an input/output device, a network access device, a bus, and the like.

The processor 40 may be a Central Processing Unit (CPU), a general purpose processor, a Digital Signal Processor (DSP), an Application Specific Integrated Circuit (ASIC), a Field-Programmable Gate Array (FPGA), a programmable logic device, a discrete gate or a transistor logic device, a discrete hardware component, etc. The general purpose processor may be a microprocessor or the processor may also be any conventional processor, etc.

The memory 41 may be an internal storage unit of the terminal device 4, such as a hard disk or a memory of the terminal device 4. The memory 41 may also be an external storage device of the terminal device 4, such as a plug-in hard disk, a Smart Media Card (SMC), a Secure Digital (SD) card, a flash card, etc. provided on the terminal device 4. Further, the memory 41 may further include both an internal storage unit and an external storage device of the terminal device 4. The memory 41 is used to store the computer program and other programs and data required by the terminal device. The memory 41 may also be used to temporarily store data that has been or will be output.

Those skilled in the art may clearly understand that, for the convenience and simplicity of description, only the division of the above functional modules is used as an example. In practical applications, the above function allocation may be accomplished by different functional modules as needed. That is to say, the internal structure of the apparatus is divided into different functional modules to accomplish all or part of the functions described above. Each of the functional modules in some embodiments may be integrated in one processing module, or each of the modules may exist in a single physical manner, or two or more modules may be integrated in one module. The above integrated module may be implemented in the form of hardware, or may be implemented in the form of a software functional module. In addition, the specific names of the various functional modules are merely for the convenience of distinguishing each other and are not intended to limit the protection scope of the present application. For the specific working process of the module in the foregoing device, reference may be made to the corresponding process in the foregoing method embodiment, which will not be described herein again.

In the above embodiments, the description of different embodiments has different focus, and the parts that are not described or recorded in some embodiments may refer to the related descriptions in other embodiments.

It may be appreciated by those skilled in the art that the units and algorithm steps of each example described in combination with the embodiments disclosed herein are capable of being implemented by electronic hardware or a combination of computer software and electronic hardware. Whether these functions are implemented by hardware or software depends on the specific application and design constraints of the technical solutions. Those skilled in the art may use different methods to implement the described functions for each particular application, but such implementation should not be considered to go beyond the scope of the present application.

In the embodiments provided by the present application, it should be understood that the disclosed terminal device and method may be implemented in other manners. For example, the terminal device embodiments described above is merely exemplary. For example, the division of the modules or units is merely logical function division, and there may be other division manners in actual implementation. For example, multiple units or components may be combined or integrated into another system, or some of the features may be ignored or not implemented. In addition, the mutual coupling or direct coupling or communication connection shown or discussed may be indirect coupling or communication connection through some interfaces, devices or units, and may be in electrical, mechanical or other forms.

The units described as separate components may or may not be physically separated. The components displayed as units may or may not be physical units. That is to say, the components may be located in one place or may also be distributed to multiple network units. Some or all of the units may be selected according to actual needs to achieve the objectives of the solution in this embodiment.

In addition, each of the function units in different embodiments of the present application may be integrated in one processing unit, or each of the units may exist in a single physical manner, or two or more units may be integrated in one unit. The above integrated module may be implemented in the form of hardware or may be implemented in the form of a software function unit.

If implemented in the form of a software function unit and when sold or used as an independent product, the integrated module/unit may be stored in a computer readable storage medium. Based on this understanding, all or a part of the processes of the present application for implementing the above exemplary method may also be implemented by instructing relevant hardware through a computer program. The computer program may be stored in a computer readable storage medium. The computer program, when being executed by the processor, may implement steps in each of the method embodiments described above. Herein, the computer program includes a computer program code, which may be in the form of a source code, in the form of an object code, in the form of an executable file or in some intermediate form, etc. The computer readable medium may include any entity or device capable of carrying the computer program code, a recording medium, a USB flash drive, a removable disk, a magnetic disk, an optical disk, a computer memory, a Read-Only Memory (ROM), a Random Access Memory (RAM), electrical carrier signals, telecommunications signals, a software distribution medium, etc. It should be noted that the content contained in the computer readable medium may be appropriately increased or decreased according to the requirements of legislation and patent practice in the jurisdiction. For example, in some jurisdictions, according to legislation and patent practice, a computer readable medium excludes electric carrier signals and telecommunication signals.

## Claims

1. A method for configuring a wireless sound box, comprising:
acquiring (S101) information of a wakeup mode of a wireless sound box, wherein the wakeup mode comprises:
a speech wakeup mode, in which, a speech signal is collected and it is determined whether the speech signal contains a speech wakeup information, if the speech wakeup information is contained, the wireless sound box is waken up; and
a non-speech wakeup mode, which comprises: a mode where wakeup is triggered by a button, and a mode where a wakeup function is turned off; wherein the mode where wakeup is triggered by the button comprises collecting a button signal and detecting whether the button signal contains a preset button wakeup information, if the button signal contains the preset button wakeup information, the wireless sound box is waken up; and
configuring (S102) an equalizer parameter of the wireless sound box according to the information of the wakeup mode,
**characterized in that**
said configuring (S102) an equalizer parameter of the wireless sound box according to the information of the wakeup mode comprises:
configuring, under the speech wakeup mode, the equalizer parameter to be a first mode parameter for regulating a nonlinear distortion, comprising: regulating a gain of a first preset frequency to a first predetermined value under the speech wakeup mode, wherein the first preset frequency comprises at least one frequency band and/or at least one frequency, and the first predetermined value comprises a set of predetermined gain multiples corresponding to various frequency bands and/or various frequencies, respectively, and
configuring, under the non-speech wakeup mode, the equalizer parameter into a second mode parameter for regulating an output sound effect, comprising: regulating gains of various frequency signals to predetermined standard values under the non-speech wakeup mode.

2. The method of claim 1, wherein the operation of configuring, under the speech wakeup mode, the equalizer parameter to be the first mode parameter for regulating the nonlinear distortion further comprises:
lowering a low frequency output power to a second predetermined value under the speech wakeup mode.

3. The method of claim 1, wherein the operation of configuring, under the non-speech wakeup mode, the equalizer parameter to be the second mode parameter for regulating the output sound effect further comprises:
regulating output powers of the various frequency signals to rated output frequencies under the non-speech wakeup mode.

4. The method of any of claims 1-3, further comprising:
establishing (S203) wireless connection with a terminal device; and
receiving (S204) equalizer configuration information transmitted from the terminal device, and configuring the equalizer parameter of the wireless sound box according to the equalizer configuration information.

5. The method of claim 4, wherein the equalizer configuration information transmitted from the terminal device comprises: automatically configured mode information, equalizer information configured according to the first mode parameter, or equalizer information configured according to the second mode parameter.

6. A wireless sound box, comprising:
an acquisition module (31), configured for acquiring information of a wakeup mode of a wireless sound box, wherein the wakeup mode comprises:
a speech wakeup mode, in which, a speech signal is collected and it is determined whether the speech signal contains a speech wakeup information, if the speech wakeup information is contained, the wireless sound box is waken up; and
a non-speech wakeup mode, which comprises: a mode where wakeup is triggered by a button, and a mode where a wakeup function is turned off; wherein the mode where wakeup is triggered by the button comprises collecting a button signal and detecting whether the button signal contains a preset button wakeup information, if the button signal contains the preset button wakeup information, the wireless sound box is waken up;
a configuration module (32), configured for configuring an equalizer parameter of the wireless sound box according to the information of the wakeup mode,
**characterized in that**
said configuring an equalizer parameter of the wireless sound box according to the information of the wakeup mode comprises:
configuring, under the speech wakeup mode, the equalizer parameter to be a first mode parameter for regulating a nonlinear distortion, comprising: regulating a gain of a first preset frequency to a first predetermined value under the speech wakeup mode, wherein the first preset frequency comprises at least one frequency band and/or at least one frequency, and the first predetermined value comprises a set of predetermined gain multiples corresponding to various frequency bands and/or various frequencies, respectively; and
configuring, under the non-speech wakeup mode, the equalizer parameter into a second mode parameter for regulating an output sound effect, comprising: regulating gains of various frequency signals to predetermined standard values under the non-speech wakeup mode.

7. The wireless sound box of claim 6, wherein the configuration module is further configured for:
lowering a low frequency output power to a second predetermined value under the speech wakeup mode.

8. The wireless sound box of claim 6, wherein the configuration module is further configured for:
regulating output powers of the various frequency signals to rated output frequencies under the non-speech wakeup mode.

9. The wireless sound box of any of claims 6-8, further comprising:
a wireless module, configured for establishing wireless connection with a terminal device (4);
a receiver module, configured for receiving equalizer configuration information transmitted from the terminal device (4), and configuring the equalizer parameter of the wireless sound box according to the equalizer configuration information.

10. The wireless sound box of claim 9, wherein the equalizer configuration information transmitted from the terminal device (4) comprises: automatically configured mode information, equalizer information configured according to the first mode parameter, or equalizer information configured according to the second mode parameter.

11. A terminal device (4), comprising: a processor (40), a memory (41), and a computer program (42) stored in the memory (41) and executable by the processor (40), wherein the processor (40) is configured to implement steps of the method according to any of claims 1-5 when executing the computer program (42).

12. A computer readable storage medium comprising instructions which, when executed by the terminal device of claim 11, cause the terminal device to carry out the method according to any of claims 1-5.

## Patentansprüche

1. Verfahren zum Konfigurieren einer drahtlosen Soundbox, Folgendes umfassend:
Erfassen (S101) von Informationen eines Reaktivierungsmodus einer drahtlosen Soundbox, wobei der Reaktivierungsmodus Folgendes umfasst:
einen Sprachreaktivierungsmodus, in dem ein Sprachsignal aufgenommen wird und bestimmt wird, ob das Sprachsignal Sprachreaktivierungsinformationen enthält, wobei, wenn die Sprachreaktivierungsinformationen enthalten sind, die drahtlose Soundbox reaktiviert wird; und
einen Nicht-Sprachreaktivierungsmodus, der Folgendes umfasst: einen Modus, in dem eine Reaktivierung durch eine Taste ausgelöst wird, und einen Modus, in dem eine Reaktivierungsfunktion ausgeschaltet ist; wobei der Modus, in dem die Reaktivierung durch die Taste ausgelöst wird, Aufnehmen eines Tastensignals und Detektieren umfasst, ob das Tastensignal voreingestellte Tastenreaktivierungsinformationen enthält, wobei, wenn das Tastensignal die voreingestellten Tastenreaktivierungsinformationen enthält, die drahtlose Soundbox reaktiviert wird; und
Konfigurieren (S102) eines Equalizer-Parameters der drahtlosen Soundbox gemäß den Informationen des Reaktivierungsmodus,
**dadurch gekennzeichnet, dass**
das Konfigurieren (S102) eines Equalizer-Parameters der drahtlosen Soundbox gemäß den Informationen des Reaktivierungsmodus Folgendes umfasst:
Konfigurieren des Equalizer-Parameters im Sprachreaktivierungsmodus als einen ersten Modusparameter zum Regulieren einer nichtlinearen Verzerrung, Folgendes umfassend: Regulieren einer Verstärkung einer ersten voreingestellten Frequenz auf einen ersten vorbestimmten Wert im Sprachreaktivierungsmodus, wobei die erste voreingestellte Frequenz mindestens ein Frequenzband und/oder mindestens eine Frequenz umfasst und der erste vorbestimmte Wert einen Satz vorbestimmter Verstärkungsvielfache umfasst, die jeweils verschiedenen Frequenzbändern und/oder verschiedenen Frequenzen entsprechen, und
Konfigurieren des Equalizer-Parameters im Nicht-Sprachreaktivierungsmodus als einenæ zweiten Modusparameter zum Regulieren eines Ausgabetoneffekts, Folgendes umfassend: Regulieren von Verstärkungen verschiedener Frequenzsignale auf vorbestimmte Standardwerte im Nicht-Sprachreaktivierungsmodus.

2. Verfahren nach Anspruch 1, wobei der Vorgang des Konfigurierens des Equalizer-Parameters im Sprachreaktivierungsmodus als der erste Modusparameter zum Regulieren der nichtlinearen Verzerrung weiterhin Folgendes umfasst:
Absenken einer Niederfrequenzausgangsleistung auf einen zweiten vorbestimmten Wert im Sprachreaktivierungsmodus.

3. Verfahren nach Anspruch 1, wobei der Vorgang des Konfigurierens des Equalizer-Parameters im Nicht-Sprachreaktivierungsmodus als der zweite Modusparameter zum Regulieren des Ausgabetoneffekts weiterhin Folgendes umfasst:
Regulieren von Ausgangsleistungen der verschiedenen Frequenzsignale auf Nennausgangsfrequenzen im Nicht-Sprachreaktivierungsmodus.

4. Verfahren nach einem der Ansprüche 1 bis 3, weiterhin Folgendes umfassend:
Herstellen (S203) einer drahtlosen Verbindung mit einem Endgerät; und
Empfangen (S204) von Equalizer-Konfigurationsinformationen, die von dem Endgerät übertragen werden, und Konfigurieren des Equalizer-Parameters der drahtlosen Soundbox gemäß den Equalizer-Konfigurationsinformationen.

5. Verfahren nach Anspruch 4, wobei die von dem Endgerät übertragenen Equalizer-Konfigurationsinformationen Folgendes umfassen: automatisch konfigurierte Modusinformationen, Equalizer-Informationen, die gemäß dem ersten Modusparameter konfiguriert sind, oder Equalizer-Informationen, die gemäß dem zweiten Modusparameter konfiguriert sind.

6. Drahtlose Soundbox, Folgendes umfassend:
ein Erfassungsmodul (31), das zum Erfassen von Informationen eines Reaktivierungsmodus einer drahtlosen Soundbox eingerichtet ist, wobei der Reaktivierungsmodus Folgendes umfasst:
einen Sprachreaktivierungsmodus, in dem ein Sprachsignal aufgenommen wird und bestimmt wird, ob das Sprachsignal Sprachreaktivierungsinformationen enthält, wobei, wenn die Sprachreaktivierungsinformationen enthalten sind, die drahtlose Soundbox reaktiviert wird; und
einen Nicht-Sprachreaktivierungsmodus, der Folgendes umfasst: einen Modus, in dem eine Reaktivierung durch eine Taste ausgelöst wird, und einen Modus, in dem eine Reaktivierungsfunktion ausgeschaltet ist; wobei der Modus, in dem die Reaktivierung durch die Taste ausgelöst wird, Aufnehmen eines Tastensignals und Detektieren umfasst, ob das Tastensignal voreingestellte Tastenreaktivierungsinformationen enthält, wobei, wenn das Tastensignal die voreingestellten Tastenreaktivierungsinformationen enthält, die drahtlose Soundbox reaktiviert wird;
ein Konfigurationsmodul (32), das zum Konfigurieren eines Equalizer-Parameters der drahtlosen Soundbox gemäß den Informationen des Reaktivierungsmodus eingerichtet ist,
**dadurch gekennzeichnet, dass**
das Konfigurieren eines Equalizer-Parameters der drahtlosen Soundbox gemäß den Informationen des Reaktivierungsmodus Folgendes umfasst:
Konfigurieren des Equalizer-Parameters im Sprachreaktivierungsmodus als einen ersten Modusparameter zum Regulieren einer nichtlinearen Verzerrung, Folgendes umfassend: Regulieren einer Verstärkung einer ersten voreingestellten Frequenz auf einen ersten vorbestimmten Wert im Sprachreaktivierungsmodus, wobei die erste voreingestellte Frequenz mindestens ein Frequenzband und/oder mindestens eine Frequenz umfasst und der erste vorbestimmte Wert einen Satz vorbestimmter Verstärkungsvielfache umfasst, die jeweils verschiedenen Frequenzbändern und/oder verschiedenen Frequenzen entsprechen; und
Konfigurieren des Equalizer-Parameters im Nicht-Sprachreaktivierungsmodus als einen zweiten Modusparameter zum Regulieren eines Ausgabetoneffekts, Folgendes umfassend: Regulieren von Verstärkungen verschiedener Frequenzsignale auf vorbestimmte Standardwerte im Nicht-Sprachreaktivierungsmodus.

7. Drahtlose Soundbox nach Anspruch 6, wobei das Konfigurationsmodul weiterhin für Folgendes eingerichtet ist:
Absenken einer Niederfrequenzausgangsleistung auf einen zweiten vorbestimmten Wert im Sprachreaktivierungsmodus.

8. Drahtlose Soundbox nach Anspruch 6, wobei das Konfigurationsmodul weiterhin für Folgendes eingerichtet ist:
Regulieren von Ausgangsleistungen der verschiedenen Frequenzsignale auf Nennausgangsfrequenzen im Nicht-Sprachreaktivierungsmodus.

9. Drahtlose Soundbox nach einem der Ansprüche 6 bis 8, weiterhin Folgendes umfassend:
ein drahtloses Modul, das zum Herstellen einer drahtlosen Verbindung mit einem Endgerät (4) eingerichtet ist;
ein Empfängermodul, das zum Empfangen von Equalizer-Konfigurationsinformationen, die von dem Endgerät (4) übertragen wurden, und zum Konfigurieren des Equalizer-Parameters der drahtlosen Soundbox gemäß den Equalizer-Konfigurationsinformationen eingerichtet ist.

10. Drahtlose Soundbox nach Anspruch 9, wobei die von dem Endgerät (4) übertragenen Equalizer-Konfigurationsinformationen Folgendes umfassen: automatisch konfigurierte Modusinformationen, Equalizer-Informationen, die gemäß dem ersten Modusparameter konfiguriert sind, oder Equalizer-Informationen, die gemäß dem zweiten Modusparameter konfiguriert sind.

11. Endgerät (4), Folgendes umfassend: einen Prozessor (40), einen Speicher (41) und ein Computerprogramm (42), das in dem Speicher (41) gespeichert ist und durch den Prozessor (40) ausführbar ist, wobei der Prozessor (40) eingerichtet ist, um beim Ausführen des Computerprogramms (42) Schritte des Verfahrens nach einem der Ansprüche 1 bis 5 zu implementieren.

12. Computerlesbares Speichermedium, Befehle umfassend, die, wenn sie durch das Endgerät nach Anspruch 11 ausgeführt werden, bewirken, dass das Endgerät das Verfahren nach einem der Ansprüche 1 bis 5 ausführt.

## Revendications

1. Procédé de configuration d'un boîtier acoustique sans fil, comprenant :
l'acquisition (S101) d'informations sur un mode de réveil d'un boîtier acoustique sans fil, le mode de réveil comprenant :
un mode de réveil vocal, dans lequel un signal vocal est collecté et il est déterminé si le signal vocal contient des information de réveil vocal, si les informations de réveil vocal sont contenues, le boîtier acoustique sans fil est réveillé ; et
un mode de réveil non vocal, qui comprend : un mode dans lequel le réveil est déclenché par un bouton, et un mode dans lequel une fonction de réveil est désactivée ; le mode dans lequel le réveil est déclenché par le bouton comprenant la collecte d'un signal de bouton et la détection du fait que le signal de bouton contient des informations de réveil de bouton prédéfinies, si le signal de bouton contient les informations de réveil de bouton prédéfinies, le boîtier acoustique sans fil est réveillé ; et
la configuration (S102) d'un paramètre d'égaliseur du boîtier acoustique sans fil en fonction des informations relatives au mode de réveil,
**caractérisé en ce que**
ladite configuration (S102) d'un paramètre d'égaliseur du boîtier acoustique sans fil en fonction des informations du mode de réveil comprend :
la configuration, dans le mode de réveil vocal, du paramètre d'égaliseur pour qu'il soit un premier paramètre de mode de régulation d'une distorsion non linéaire, comprenant : la régulation d'un gain d'une première fréquence prédéfinie à une première valeur prédéterminée dans le mode de réveil vocal, la première fréquence prédéfinie comprenant au moins une bande de fréquence et/ou au moins une fréquence, et la première valeur prédéterminée comprenant un ensemble de multiples de gain prédéterminés correspondant à diverses bandes de fréquence et/ou à diverses fréquences, respectivement, et
la configuration, dans le mode de réveil non vocal, du paramètre d'égaliseur en un second paramètre de mode pour réguler un effet sonore de sortie, comprenant : la régulation de gains de divers signaux de fréquence à des valeurs standard prédéterminées dans le mode de réveil non vocal.

2. Procédé selon la revendication 1, l'opération de configuration, sous le mode de réveil vocal, du paramètre d'égaliseur pour être le premier paramètre de mode pour réguler la distorsion non linéaire comprenant en outre :
l'abaissement d'une puissance de sortie basse fréquence à une seconde valeur prédéterminée en mode de réveil vocal.

3. Procédé selon la revendication 1, l'opération de configuration, sous le mode de réveil non vocal, du paramètre d'égaliseur pour être le second paramètre de mode pour réguler l'effet sonore de sortie comprenant en outre :
la régulation des puissances de sortie des différents signaux de fréquence à des fréquences de sortie nominales dans le mode de réveil non vocal.

4. Procédé selon l'une quelconque des revendications 1 à 3, comprenant en outre :
l'établissement (S203) d'une connexion sans fil avec un dispositif terminal ; et
la réception (S204) d'informations de configuration d'égaliseur transmises par le dispositif terminal, et la configuration du paramètre d'égaliseur du boîtier acoustique sans fil en fonction des informations de configuration d'égaliseur.

5. Procédé selon la revendication 4, les informations de configuration d'égaliseur transmises par le dispositif terminal comprenant : des informations de mode configurées automatiquement, des informations d'égaliseur configurées en fonction du premier paramètre de mode, ou des informations d'égaliseur configurées en fonction du second paramètre de mode.

6. Boîtier acoustique sans fil, comprenant :
un module d'acquisition (31), configuré pour acquérir des informations sur un mode de réveil d'un boîtier acoustique sans fil, le mode de réveil comprenant :
un mode de réveil vocal, dans lequel un signal vocal est collecté et il est déterminé si le signal vocal contient des informations de réveil vocal, si les informations de réveil vocal sont contenue, le boîtier acoustique sans fil est réveillé ; et
un mode de réveil non vocal, qui comprend : un mode dans lequel le réveil est déclenché par un bouton, et un mode dans lequel une fonction de réveil est désactivée ; le mode dans lequel le réveil est déclenché par le bouton comprenant la collecte d'un signal de bouton et la détection du fait que le signal de bouton contient des informations de réveil de bouton prédéfinies ; si le signal de bouton contient les informations de réveil de bouton prédéfinies, le boîtier acoustique sans fil est réveillé ;
un module de configuration (32), configuré pour configurer un paramètre d'égaliseur du boîtier acoustique sans fil en fonction des informations relatives au mode de réveil,
**caractérisé en ce que**
ladite configuration d'un paramètre d'égaliseur du boîtier acoustique sans fil en fonction des informations du mode de réveil comprend :
la configuration, dans le mode de réveil vocal, du paramètre d'égaliseur pour qu'il soit un premier paramètre de mode de régulation d'une distorsion non linéaire, comprenant : la régulation d'un gain d'une première fréquence prédéfinie à une première valeur prédéterminée dans le mode de réveil vocal, la première fréquence prédéfinie comprenant au moins une bande de fréquence et/ou au moins une fréquence, et la première valeur prédéterminée comprenant un ensemble de multiples de gain prédéterminés correspondant à diverses bandes de fréquence et/ou à diverses fréquences, respectivement ; et
la configuration, dans le mode de réveil non vocal, du paramètre d'égaliseur en un second paramètre de mode pour réguler un effet sonore de sortie, comprenant : la régulation des gains de divers signaux de fréquence à des valeurs standard prédéterminées dans le mode de réveil non vocal.

7. Boîtier acoustique sans fil selon la revendication 6, le module de configuration étant en outre configuré pour :
abaisser une puissance de sortie basse fréquence à une seconde valeur prédéterminée dans le mode de réveil vocal.

8. Boîtier acoustique sans fil selon la revendication 6, le module de configuration étant en outre configuré pour :
réguler les puissances de sortie des divers signaux de fréquence aux fréquences de sortie nominales en mode de réveil non vocal.

9. Boîtier acoustique sans fil selon l'une quelconque des revendications 6 à 8, comprenant en outre :
un module sans fil, configuré pour établir une connexion sans fil avec un dispositif terminal (4) ;
un module récepteur, configuré pour recevoir des informations de configuration d'égaliseur transmises par le dispositif terminal (4), et configurer le paramètre d'égaliseur du boîtier acoustique sans fil en fonction des informations de configuration d'égaliseur.

10. Boîtier acoustique sans fil selon la revendication 9, les informations de configuration d'égaliseur transmises par le dispositif terminal (4) comprenant : des informations de mode configurées automatiquement, des informations d'égaliseur configurées en fonction du premier paramètre de mode, ou des informations d'égaliseur configurées en fonction du second paramètre de mode.

11. Dispositif terminal (4), comprenant : un processeur (40), une mémoire (41), et un programme informatique (42) stocké dans la mémoire (41) et exécutable par le processeur (40), le processeur (40) étant configuré pour mettre en œuvre les étapes du procédé selon l'une quelconque des revendications 1 à 5 lors de l'exécution du programme informatique (42).

12. Support de stockage lisible par ordinateur comprenant des instructions qui, lorsqu'elles sont exécutées par le dispositif terminal selon la revendication 11, amènent le dispositif terminal à mettre en œuvre le procédé selon l'une quelconque des revendications 1 à 5.
